# FASCICULE DE BREVET EUROPEEN

(11) **EP 3 532 577 B1**
(45) Date de publication et mention de la délivrance du brevet: **08.05.2024**
(21) Numéro de dépôt: 17794028.5
(22) Date de dépôt: 26.10.2017
(51) Int. Cl.: C10M 107/34, H01M 10/00, C10N 30/06, C10N 40/25

(54) **UTILISATION D'UNE COMPOSITION POUR VÉHICULE ÉLECTRIQUE**
VERWENDUNG EINER ZUSAMMENSETZUNG FÜR EIN ELEKTROFAHRZEUG
USE OF A COMPOSITION FOR AN ELECTRIC VEHICLE

(30) Priorité: 27.10.2016 FR 1660470
(43) Date de publication de la demande: 04.09.2019
(73) Titulaire: TotalEnergies OneTech, 92400 Courbevoie (FR)
(72) Inventeur: MARTIN, Didier, 69440 St Laurent d'Agny (FR); CHINA, Philippe, 38200 Seyssuel (FR)
(74) Mandataire: August Debouzy
(86) Numéro de dépôt international: PCT/FR2017/052954
(87) Numéro de publication internationale: WO 2018/078290

(56) Documents cités:
- WO-A-2013/164459
- JP-A- 2009 242 547
- JP-A- 2012 184 360
- JP-A- 2014 019 712
- JP-A- 2016 098 279
- US-B1- 8 400 030

## Description

### DOMAINE TECHNIQUE

L'invention concerne l'utilisation d'une composition lubrifiante pour refroidir et/ou lubrifier un moteur de véhicule électrique et ses différentes parties notamment en mouvement. L'invention concerne en particulier l'utilisation d'une composition lubrifiante comprenant au moins un polyalkylène glycol, pour lubrifier ces parties en mouvement et la transmission.

L'invention s'applique aussi à la batterie d'un véhicule électrique.

### ETAT DE L'ART

L'évolution des normes internationales pour la réduction des émissions de CO₂, mais également pour la diminution de la consommation d'énergie, pousse les constructeurs automobiles à proposer des solutions alternatives aux moteurs à combustion.

L'une des solutions identifiée par les constructeurs automobiles consiste à remplacer les moteurs à combustion par des moteurs électriques. Les recherches pour la réduction des émissions de CO₂ ont donc mené au développement des véhicules électriques par un certain nombre de compagnies automobiles. Par « véhicule électrique » au sens de la présente invention, on entend un véhicule comprenant un moteur électrique comme unique moyen de propulsion à l'inverse d'un véhicule hybride qui comprend comme moyens de propulsion un moteur à combustion et un moteur électrique.

Les moteurs électriques génèrent de la chaleur pendant leur fonctionnement. Si la quantité de chaleur générée est supérieure à la quantité de chaleur normalement dissipée à l'environnement, il est nécessaire d'assurer un refroidissement du moteur. De manière générale, le refroidissement s'effectue sur une ou plusieurs parties du moteur générant de la chaleur et/ou les parties du moteur sensibles à la chaleur, afin d'éviter d'atteindre des températures dangereuses.

Traditionnellement, il est connu de refroidir les moteurs électriques par air, généralement par convection forcée. Cette méthode de refroidissement présente l'avantage d'éviter la préparation d'un fluide de refroidissement spécifique. Cependant, avec l'apparition de moteurs de plus en plus petits et dont la puissance est de plus en plus grande, cette méthode de refroidissement n'est plus suffisante surtout de par l'efficacité limitée de l'air pour le refroidissement.

Aujourd'hui, il est également connu des méthodes de refroidissement du moteur par eau. Bien que la capacité calorifique de l'eau soit élevée, il n'est pas possible d'envisager un refroidissement direct par contact de l'eau avec le moteur électrique à cause de la conductivité électrique de l'eau. Ainsi, le système de refroidissement nécessite l'installation d'une enveloppe externe ce qui augmente considérablement le volume du moteur.

Des méthodes de refroidissement d'un moteur électrique par jet d'huile ont également déjà été proposées.

WO 2011/113851 décrit l'utilisation d'une composition lubrifiante comprenant une huile de base, préférentiellement une polyalphaoléfine (PAO) ou du GTL pour refroidir un moteur électrique de véhicule hybride ou de véhicule équipé d'un système KERS (Système de Récupération de l'Energie Cinétique ou Kinetic Energy Recovery System en anglais).

Les moteurs électriques des véhicules hybrides ont une fréquence d'utilisation moins importante que les moteurs des véhicules électriques. De plus, la densité de puissance est moins forte pour les moteurs électriques de véhicule hybride.

Ainsi, un moteur de véhicule électrique est soumis à des sollicitations bien plus importantes qu'un moteur électrique d'un véhicule hybride ; ce qui implique l'utilisation d'une huile avec des propriétés de refroidissement accrues.

EP 2 520 637 décrit une composition lubrifiante comprenant au moins un ester ou un éther pour le refroidissement d'un moteur électrique et la lubrification d'engrenages. Cependant, il est connu que les esters peuvent présenter une instabilité à l'oxydation. De plus, les esters peuvent poser des problèmes de compatibilité avec les vernis et les joints ce qui provoque une détérioration de ces derniers. En particulier, le bobinage d'un moteur électrique est revêtu d'un vernis. La composition lubrifiante étant en contact direct avec le bobinage, il est primordial que la composition lubrifiante soit inerte vis-à-vis de ce vernis.

JP 2012/184360 décrit une composition lubrifiante comprenant une huile de base synthétique et un composé fluoré pour le refroidissement d'un moteur électrique. Cependant, les hyrdochlorofluorocarbures présents dans ces compositions sont des gaz organiques ayant un impact négatif important sur la couche d'ozone et sont de puissants gaz à effet de serre. Les gaz fluorés font également l'objet de plusieurs réglementations visant à en limiter fortement l'utilisation.

WO 2013/164459 décrit une composition lubrifiante pour véhicule hybride ou micro-hybride comprenant au moins un polyalkylène glycol. JP2016/098279 décrit une composition lubrifiante aqueuse contenant du graphène et éventuellement des glycols. US 8,400,030 décrit une composition lubrifiante pour fluide de transmission pour véhicule hybride. JP 2009/242547 décrit une composition lubrifiante pour véhicule hybride ou électrique comprenant au moins un ester. JP 2014/019712 décrit une composition lubrifiante comprenant une huile de base de type naphtène, polyalphaoléfine ou ester et un dérivé d'acide tartrique.

US 8 400 030 décrit une composition lubrifiante pour une transmission dans un véhicule hybride, comprenant une huile de base pouvant être choisie i.a. parmi les esters d'alkyle mono-et/ou dicarboxyliques, les poly-alpha-oléfines et les polyalkylène glycols (PAG).

Le moteur électrique est alimenté par une batterie. Les batteries Lithium-ion sont les plus couramment utilisées dans le domaine des véhicules électriques. La diminution de la taille des batteries ayant la même puissance ou une puissance améliorée pose des problèmes de régulation de la température des batteries. En effet, lorsque la température des batteries Li-ion est trop élevée, il existe un risque d'enflammer la batterie voire un risque d'explosion de la batterie. En sens inverse, lorsque la température est trop basse, il existe un risque de déchargement prématuré de la batterie.
A l'heure actuelle, dans les véhicules électriques proposés par les constructeurs, les batteries sont refroidies par de l'air, par de l'eau ou par des compositions comprenant de l'eau et un glycol. Aucune solution connue à ce jour dans des véhicules automobiles pour le grand public ne propose de refroidir une batterie avec une huile lubrifiante. Un objectif de la présente invention est donc de fournir une composition lubrifiante palliant tout ou partie aux inconvénients de l'art antérieur.

Ainsi, un premier objectif de la présente invention est de fournir une composition lubrifiante pour refroidir un moteur de véhicule électrique.

Un autre objectif de la présente invention est de fournir une composition lubrifiante pour refroidir l'électronique de puissance et/ou le rotor et/ou le stator d'un moteur de véhicule électrique.

Un autre objectif de la présente invention est de fournir une composition lubrifiante pour refroidir un moteur de véhicule électrique et dont la formulation est facile à mettre en oeuvre.

Un autre objectif de la présente invention est de fournir une composition lubrifiante pour lubrifier et/ou refroidir un moteur de véhicule électrique.

Un autre objectif de la présente invention est de fournir une composition lubrifiante pour refroidir un moteur et pour lubrifier la transmission d'un véhicule électrique.

Un autre objectif de la présente invention est de fournir une composition lubrifiante pour refroidir la batterie d'un véhicule électrique.

Pour répondre aux objectifs ci-dessus et aux inconvénients cités dans l'état de la technique, la présente invention propose l'utilisation d'une composition lubrifiante comprenant au moins un polyalkylène glycol (PAG) obtenu par polymérisation ou copolymérisation d'oxydes d'alkylène comprenant de 2 à 8 atomes de carbone, de préférence de 2 à 4 atomes de carbone, la composition comprenant de 70 à 99% en poids de PAG par rapport au poids total de la composition.

De manière surprenante, la demanderesse a constaté que la présence d'au moins un PAG obtenu par polymérisation ou copolymérisation d'oxydes d'alkylène comprenant de 2 à 8 atomes de carbone, de préférence de 2 à 4 atomes de carbone dans une composition lubrifiante comprenant de 70 à 99% en poids de PAG par rapport au poids total de la composition, permet à la composition lubrifiante, une fois mise en oeuvre dans un moteur de véhicule électrique, de refroidir ledit moteur.

Ainsi la présente invention permet de formuler des compositions lubrifiantes présentant à la fois une bonne stabilité, notamment à l'oxydation et de bonnes propriétés de refroidissement d'un moteur de véhicule électrique.

Avantageusement, les compositions lubrifiantes selon l'invention présentent de bonnes propriétés de refroidissement d'un moteur de véhicule électrique tout en présentant de bonnes propriétés de désaération.

Avantageusement, les compositions lubrifiantes selon l'invention présentent de bonnes propriétés de refroidissement d'un moteur de véhicule électrique tout en présentant de bonnes propriétés anti-corrosion.

Avantageusement, les compositions lubrifiantes selon l'invention présentent de bonnes propriétés de refroidissement d'un moteur de véhicule électrique tout en limitant les risques de détérioration des joints ou des vernis présents dans le moteur.

Avantageusement, les compositions lubrifiantes selon l'invention présentent de bonnes propriétés de refroidissement d'un moteur de véhicule électrique tout en étant respectueuses de l'environnement et de la santé.

Avantageusement, les compositions lubrifiantes selon l'invention présentent de bonnes propriétés de refroidissement d'un moteur de véhicule électrique tout ayant de bonnes propriétés de rétention d'eau, réduisant ainsi le risque de contact de l'eau avec le revêtement du bobinage d'un moteur de véhicule électrique, et donc le risque de détérioration dudit bobinage.

Avantageusement, les compositions lubrifiantes selon l'invention présentent de bonnes propriétés de refroidissement de l'électronique de puissance et/ou du rotor et/ou du stator d'un moteur de véhicule électrique.

Avantageusement, les compositions lubrifiantes selon l'invention présentent de bonnes propriétés de refroidissement et de lubrification d'un moteur de véhicule électrique.

Avantageusement, les compositions lubrifiantes selon l'invention présentent de bonnes propriétés de refroidissement d'un moteur et de lubrification de la transmission, en particulier du réducteur d'un véhicule électrique.

Avantageusement, les compositions lubrifiantes selon l'invention présentent de bonnes propriétés de refroidissement de la batterie d'un véhicule électrique.

Avantageusement, les compositions lubrifiantes selon l'invention présentent de bonnes propriétés de refroidissement d'un moteur électrique de véhicule hybride.

### BREVE DESCRIPTION DE L'INVENTION

L'invention a ainsi pour objet l' utilisation d'une composition lubrifiante comprenant au moins un polyalkylène glycol (PAG) obtenu par polymérisation ou copolymérisation d'oxydes d'alkylène comprenant de 2 à 8 atomes de carbone, de préférence de 2 à 4 atomes de carbone dans un véhicule électrique, dans laquelle la composition comprend de 70 à 99% en poids de PAG par rapport au poids total de la composition.

Avantageusement, l'invention a pour objet l' utilisation d'une composition lubrifiante comprenant au moins un polyalkylène glycol (PAG) obtenu par polymérisation ou copolymérisation d'oxydes d'alkylène comprenant de 2 à 8 atomes de carbone, de préférence de 2 à 4 atomes de carbone pour refroidir le moteur, dans laquelle la composition comprend de 70 à 99% en poids de PAG par rapport au poids total de la composition.

Avantageusement, l'invention a pour objet l' utilisation d'une composition lubrifiante comprenant au moins un polyalkylène glycol (PAG) obtenu par polymérisation ou copolymérisation d'oxydes d'alkylène comprenant de 2 à 8 atomes de carbone, de préférence de 2 à 4 atomes de carbone pour refroidir l'électronique de puissance et/ou le rotor et/ou le stator du moteur, dans laquelle la composition comprend de 70 à 99% en poids de PAG par rapport au poids total de la composition.

Avantageusement, l'invention a pour objet l' utilisation d'une composition lubrifiante comprenant au moins un polyalkylène glycol (PAG) obtenu par polymérisation ou copolymérisation d'oxydes d'alkylène comprenant de 2 à 8 atomes de carbone, de préférence de 2 à 4 atomes de carbone pour refroidir la batterie, dans laquelle la composition comprend de 70 à 99% en poids de PAG par rapport au poids total de la composition.

Avantageusement, l'invention a pour objet l' utilisation d'une composition lubrifiante comprenant au moins un polyalkylène glycol (PAG) obtenu par polymérisation ou copolymérisation d'oxydes d'alkylène comprenant de 2 à 8 atomes de carbone, de préférence de 2 à 4 atomes de carbone pour lubrifier le moteur, dans laquelle la composition comprend de 70 à 99% en poids de PAG par rapport au poids total de la composition.

Avantageusement, l'invention a pour objet l' utilisation d'une composition lubrifiante comprenant au moins un polyalkylène glycol (PAG) obtenu par polymérisation ou copolymérisation d'oxydes d'alkylène comprenant de 2 à 8 atomes de carbone, de préférence de 2 à 4 atomes de carbone pour lubrifier les roulements situés entre le rotor et le stator et/ou le réducteur du moteur, dans laquelle la composition comprend de 70 à 99% en poids de PAG par rapport au poids total de la composition.

Avantageusement, l'invention a pour objet l' utilisation d'une composition lubrifiante comprenant au moins un polyalkylène glycol (PAG) obtenu par polymérisation ou copolymérisation d'oxydes d'alkylène comprenant de 2 à 8 atomes de carbone, de préférence de 2 à 4 atomes de carbone pour lubrifier la transmission, dans laquelle la composition comprend de 70 à 99% en poids de PAG par rapport au poids total de la composition.

Avantageusement, l'invention a pour objet l' utilisation d'une composition lubrifiante comprenant au moins un polyalkylène glycol (PAG) obtenu par polymérisation ou copolymérisation d'oxydes d'alkylène comprenant de 2 à 8 atomes de carbone, de préférence de 2 à 4 atomes de carbone pour refroidir et lubrifier le moteur, dans laquelle la composition comprend de 70 à 99% en poids de PAG par rapport au poids total de la composition.

Avantageusement, l'invention a pour objet l' utilisation d'une composition lubrifiante comprenant au moins un polyalkylène glycol (PAG) obtenu par polymérisation ou copolymérisation d'oxydes d'alkylène comprenant de 2 à 8 atomes de carbone, de préférence de 2 à 4 atomes de carbone pour refroidir le moteur et lubrifier la transmission, dans laquelle la composition comprend de 70 à 99% en poids de PAG par rapport au poids total de la composition.

Avantageusement, le PAG est obtenu par copolymérisation d'oxyde d'éthylène et d'oxyde de propylène.

Avantageusement, le PAG est obtenu par polymérisation d'oxyde d'éthylène.

Avantageusement, le PAG est obtenu par polymérisation d'oxyde de propylène.

Avantageusement, le PAG est obtenu par polymérisation d'oxyde de butylène.

Selon l'invention, la composition lubrifiante comprend de 70 à 99% de PAG en poids par rapport au poids total de la composition, de préférence de 80 à 99%.

### DESCRIPTION DETAILLE DE L'INVENTION

L'invention concerne l'utilisation d'une composition comprenant au moins un polyalkylène glycol (PAG) obtenu par polymérisation ou copolymérisation d'oxydes d'alkylène comprenant de 2 à 8 atomes de carbone, de préférence de 2 à 4 atomes dans un véhicule électrique, ledit véhicule électrique comprenant un moteur électrique comme unique moyen de propulsion, dans laquelle la composition comprend de 70 à 99% en poids de PAG par rapport au poids total de la composition.

### Composition lubrifiante :

La composition lubrifiante selon l'invention comprend au moins un polyalkylène glycol (PAG) obtenu par polymérisation ou copolymérisation d'oxydes d'alkylène comprenant de 2 à 8 atomes de carbone, de préférence de 2 à 4 atomes de carbone, la composition comprenant de 70 à 99% en poids de PAG par rapport au poids total de la composition.

Le PAG peut être un polymère ou un copolymère (statistique ou blocs) d'oxydes d'alkylène comprenant de 2 à 8 atomes de carbone, de préférence de 2 à 4 atomes de carbone, qui peuvent être notamment préparés selon les méthodes décrites dans la demande WO 2009/134716, page 2 ligne 26 à page 4 ligne 12, par exemple par attaque d'un initiateur alcool sur la liaison époxy d'un oxyde d'alkylène et propagation de la réaction.

Ces PAG peuvent être préparés, par réaction d'un ou plusieurs alcools avec un oxyde d'alkylène ou un mélange d'oxydes d'alkylène comprenant de 2 à 8 atomes de carbone, de préférence de 2 à 4 atomes de carbone.

Dans un mode de réalisation préféré de l'invention, le PAG est préparé à partir d'alcool comportant de 3 à 12 atomes de carbone. Comme exemple d'alcool, on peut citer le butanol.

Dans un mode de réalisation préféré, le PAG est obtenu par polymérisation ou copolymérisation d'oxyde d'éthylène, d'oxyde de propylène et/ou d'oxyde de butylène.

Dans un mode de réalisation plus préféré, le PAG est obtenu par polymérisation d'oxyde d'éthylène.

Dans un mode de réalisation plus préféré, le PAG est obtenu par copolymérisation d'oxyde d'éthylène et d'oxyde de propylène.

Dans un mode de réalisation plus préféré, le PAG est obtenu par copolymérisation d'oxyde de propylène et d'oxyde de butylène.

Dans un autre mode de réalisation plus préféré, le PAG est obtenu par polymérisation d'oxyde de butylène.

De manière particulièrement avantageuse, le PAG est obtenu par polymérisation d'oxyde de propylène.

Comme exemples de PAG pouvant être utilisés dans la composition lubrifiante utilisée selon l'invention, on peut citer les PAG décrits dans les documents WO 2012/070007 ou WO 2013/164457.

Comme exemples de PAG particulièrement préférés, on peut citer les produits Synalox 100-20B^{®} et Synalox 100-50B^{®} de la société DOW.

Dans un mode de réalisation, la composition lubrifiante comprend de 1 à 99% en poids par rapport au poids total de la composition.

Selon l'invention, la composition lubrifiante comprend de 70 à 99%, avantageusement de 80 à 99% en poids de PAG par rapport au poids total de la composition ; ce mode de réalisation pouvant correspondre à l'utilisation du PAG selon l'invention comme huile de base majoritaire ou unique dans la composition lubrifiante.

Ainsi, la composition lubrifiante selon la présente invention peut comprendre en outre une huile de base additionnelle connue dans le domaine des lubrifiants.

L'huile de base additionnelle utilisée dans les compositions lubrifiantes selon l'invention peut être des huiles d'origines minérales ou synthétiques appartenant aux groupes I à V selon les classes définies dans la classification API (ou leurs équivalents selon la classification ATIEL) (tableau A) ou leurs mélanges.

**Tableau A**

| | Teneur en saturés | Teneur en soufre | Indice de viscosité (VI) |
|---|---|---|---|
| Groupement I | < 90 % | > 0,03 % | 80 ≤VI < 120 |
| Huiles minérales | | | |
| Groupement II | ≥90 % | ≤0,03 % | 80 ≤VI < 120 |
| Huiles hydrocraquées | | | |
| Groupement III | ≥90 % | ≤0,03 % | ≥120 |
| Huiles hydrocraquées ou hydro-isomérisées | | | |
| Groupement IV | Polyalphaoléfines (PAO) | | |
| Groupement V | Esters et autres bases non incluses dans les groupes I à IV | | |

Les huiles de base minérales selon l'invention incluent tous types d'huiles de base obtenues par distillation atmosphérique et sous vide du pétrole brut, suivies d'opérations de raffinage telles qu'extraction au solvant, désalphatage, déparaffinage au solvant, hydrotraitement, hydrocraquage, hydroisomérisation et hydrofinition.

Des mélanges d'huiles synthétiques et minérales peuvent également être employés.

Il n'existe généralement aucune limitation quant à l'emploi de bases lubrifiantes différentes pour réaliser les compositions lubrifiantes utilisées selon l'invention, si ce n'est qu'elles doivent avoir des propriétés, notamment de viscosité, indice de viscosité, teneur en soufre, résistance à l'oxydation, adaptées à une utilisation pour des moteurs ou pour des transmissions de véhicule.

Les huiles de bases des compositions lubrifiantes utilisées selon l'invention peuvent également être choisies parmi les huiles synthétiques, telles certains esters d'acides carboxyliques et d'alcools, et parmi les polyalphaoléfines. Les polyalphaoléfines utilisées comme huiles de base sont par exemple obtenues à partir de monomères comprenant de 4 à 32 atomes de carbone, par exemple à partir d'octène ou de décène, et dont la viscosité à 100 °C est comprise entre 1,5 et 15 mm².s⁻¹ selon la norme ASTM D445. Leur masse moléculaire moyenne est généralement comprise entre 250 et 3 000 selon la norme ASTM D5296.

De manière préférée, les huiles de base de la présente invention sont choisies parmi les huiles de base ci-dessus dont la teneur en aromatique est comprise entre 0 et 45%, de préférence entre 0 et 30%. La teneur en aromatique des huiles est mesurée selon la méthode UV Burdett.

La composition lubrifiante selon la présente invention peut comprendre en outre un additif choisi parmi choisi les modificateurs de frottements, les détergents, les additifs anti-usure, les additifs extrême-pression, les améliorants de l'indice de viscosité, les dispersants, les antioxydants, les améliorants du point d'écoulement, les anti-mousse, les épaississants et leurs mélanges.

Les additifs anti-usure et les additifs extrême pression protègent les surfaces en frottement par formation d'un film protecteur adsorbé sur ces surfaces.

Il existe une grande variété d'additifs anti-usure. De manière préférée pour la composition lubrifiante selon l'invention, les additifs anti-usure sont choisis parmi des additifs phospho-soufrés comme les alkylthiophosphates métalliques, en particulier les alkylthiophosphates de zinc, et plus spécifiquement les dialkyldithiophosphates de zinc ou ZnDTP. Les composés préférés sont de formule Zn((SP(S)(OR²)(OR³))₂, dans laquelle R² et R³, identiques ou différents, représentent indépendamment un groupement alkyle, préférentiellement un groupement alkyle comportant de 1 à 18 atomes de carbone.

Les phosphates d'amines sont également des additifs anti-usure qui peuvent être employés dans la composition lubrifiante selon l'invention. Toutefois, le phosphore apporté par ces additifs peut agir comme poison des systèmes catalytiques des automobiles car ces additifs sont générateurs de cendres. On peut minimiser ces effets en substituant partiellement les phosphates d'amines par des additifs n'apportant pas de phosphore, tels que, par exemple, les polysulfures, notamment les oléfines soufrées.

De manière avantageuse, la composition lubrifiante selon l'invention peut comprendre de 0,01 à 6 % en masse, préférentiellement de 0,05 à 4 % en masse, plus préférentiellement de 0,1 à 2 % en masse par rapport à la masse totale de composition lubrifiante, d'additifs anti-usure et d'additifs extrême-pression.

De manière avantageuse, la composition lubrifiante selon l'invention peut comprendre au moins un additif modificateur de frottement. L'additif modificateur de frottement peut être choisi parmi un composé apportant des éléments métalliques et un composé exempt de cendres. Parmi les composés apportant des éléments métalliques, on peut citer les complexes de métaux de transition tels que Mo, Sb, Sn, Fe, Cu, Zn dont les ligands peuvent être des composés hydrocarbonés comprenant des atomes d'oxygène, d'azote, de soufre ou de phosphore. Les additifs modificateurs de frottement exempt de cendres sont généralement d'origine organique et peuvent être choisis parmi les monoesters d'acides gras et de polyols, les amines alcoxylées, les amines grasses alcoxylées, les époxydes gras, les époxydes gras de borate; les amines grasses ou les esters de glycérol d'acide gras. Selon l'invention, les composés gras comprennent au moins un groupement hydrocarboné comprenant de 10 à 24 atomes de carbone.

De manière avantageuse, la composition lubrifiante selon l'invention peut comprendre de 0,01 à 2 % en masse ou de 0,01 à 5 % en masse, préférentiellement de 0,1 à 1,5 % en masse ou de 0,1 à 2 % en masse par rapport à la masse totale de la composition lubrifiante, d'additif modificateur de frottement.

De manière avantageuse, la composition lubrifiante selon l'invention peut comprendre au moins un additif antioxydant.

L'additif antioxydant permet généralement de retarder la dégradation de la composition lubrifiante en service. Cette dégradation peut notamment se traduire par la formation de dépôts, par la présence de boues ou par une augmentation de la viscosité de la composition lubrifiante.

Les additifs antioxydants agissent notamment comme inhibiteurs radicalaires ou destructeurs d'hydropéroxydes. Parmi les additifs antioxydants couramment employés, on peut citer les additifs antioxydants de type phénolique, les additifs antioxydants de type aminé, les additifs antioxydants phosphosoufrés. Certains de ces additifs antioxydants, par exemple les additifs antioxydants phosphosoufrés, peuvent être générateurs de cendres. Les additifs antioxydants phénoliques peuvent être exempt de cendres ou bien être sous forme de sels métalliques neutres ou basiques. Les additifs antioxydants peuvent notamment être choisis parmi les phénols stériquement encombrés, les esters de phénol stériquement encombrés et les phénols stériquement encombrés comprenant un pont thioéther, les diphénylamines, les diphénylamines substituées par au moins un groupement alkyle en C₁-C₁₂, les N,N'-dialkyle-aryle-diamines et leurs mélanges.

De préférence selon l'invention, les phénols stériquement encombrés sont choisis parmi les composés comprenant un groupement phénol dont au moins un carbone vicinal du carbone portant la fonction alcool est substitué par au moins un groupement alkyle en C₁- C₁₀, de préférence un groupement alkyle en C₁-C₆, de préférence un groupement alkyle en C₄, de préférence par le groupement ter-butyle.

Les composés aminés sont une autre classe d'additifs antioxydants pouvant être utilisés, éventuellement en combinaison avec les additifs antioxydants phénoliques. Des exemples de composés aminés sont les amines aromatiques, par exemple les amines aromatiques de formule NR⁴R⁵R⁶ dans laquelle R⁴ représente un groupement aliphatique ou un groupement aromatique, éventuellement substitué, R⁵ représente un groupement aromatique, éventuellement substitué, R⁶ représente un atome d'hydrogène, un groupement alkyle, un groupement aryle ou un groupement de formule R⁷S(O)_{z}R⁸ dans laquelle R⁷ représente un groupement alkylène ou un groupement alkenylène, R⁸ représente un groupement alkyle, un groupement alcényle ou un groupement aryle et z représente 0, 1 ou 2.

Des alkyl phénols sulfurisés ou leurs sels de métaux alcalins et alcalino-terreux peuvent également être utilisés comme additifs antioxydants.

Une autre classe d'additifs antioxydants est celle des composés cuivrés, par exemples les thio- ou dithio-phosphates de cuivre, les sels de cuivre et d'acides carboxyliques, les dithiocarbamates, les sulphonates, les phénates, les acétylacétonates de cuivre. Les sels de cuivre I et II, les sels d'acide ou d'anhydride succiniques peuvent également être utilisés.

La composition lubrifiante selon l'invention peut contenir tous types d'additifs antioxydants connus de l'homme du métier.

De manière avantageuse, la composition lubrifiante comprend au moins un additif antioxydant exempt de cendres.

De manière également avantageuse, la composition lubrifiante selon l'invention comprend de 0,5 à 2 % en poids par rapport à la masse totale de la composition, d'au moins un additif antioxydant.

La composition lubrifiante selon l'invention peut également comprendre au moins un additif détergent.

Les additifs détergents permettent généralement de réduire la formation de dépôts à la surface des pièces métalliques par dissolution des produits secondaires d'oxydation et de combustion.

Les additifs détergents utilisables dans la composition lubrifiante selon l'invention sont généralement connus de l'homme de métier. Les additifs détergents peuvent être des composés anioniques comprenant une longue chaîne hydrocarbonée lipophile et une tête hydrophile. Le cation associé peut être un cation métallique d'un métal alcalin ou alcalino-terreux.

Les additifs détergents sont préférentiellement choisis parmi les sels de métaux alcalins ou de métaux alcalino-terreux d'acides carboxyliques, les sulfonates, les salicylates, les naphténates, ainsi que les sels de phénates. Les métaux alcalins et alcalino-terreux sont préférentiellement le calcium, le magnésium, le sodium ou le baryum.

Ces sels métalliques comprennent généralement le métal en quantité stoechiométrique ou bien en excès, donc en quantité supérieure à la quantité stoechiométrique. Il s'agit alors d'additifs détergents surbasés ; le métal en excès apportant le caractère surbasé à l'additif détergent est alors généralement sous la forme d'un sel métallique insoluble dans l'huile, par exemple un carbonate, un hydroxyde, un oxalate, un acétate, un glutamate, préférentiellement un carbonate.

De manière avantageuse, la composition lubrifiante selon l'invention peut comprendre de 2 à 4 % en poids d'additif détergent par rapport à la masse totale de la composition lubrifiante.

De manière également avantageuse, la composition lubrifiante selon l'invention peut également comprendre au moins un additif abaisseur de point d'écoulement.

En ralentissant la formation de cristaux de paraffine, les additifs abaisseurs de point d'écoulement améliorent généralement le comportement à froid de la composition lubrifiante selon l'invention.

Comme exemple d'additifs abaisseurs de point d'écoulement, on peut citer les polyméthacrylates d'alkyle, les polyacrylates, les polyarylamides, les polyalkylphénols, les polyalkylnaphtalènes, les polystyrènes alkylés.

De manière avantageuse, la composition lubrifiante selon l'invention peut également comprendre au moins un agent dispersant.

L'agent dispersant peut être choisis parmi les bases de Mannich, les succinimides et leurs dérivés.

De manière également avantageuse, la composition lubrifiante selon l'invention peut comprendre de 0,2 à 10 % en masse d'agent dispersant par rapport à la masse totale de la composition lubrifiante.

La composition lubrifiante de la présente invention peut également comprendre au moins un additif améliorant l'indice de viscosité. Comme exemples d'additifs améliorant l'indice de viscosité, on peut citer les esters polymères, les homopolymères ou les copolymères, hydrogénés ou non- hydrogénés, du styrène, du butadiène et de l'isoprène, les polyacrylates, les polyméthacrylates (PMA) ou encore les copolymères oléfines, notamment les copolymères ethylène/propylène.

La composition lubrifiante selon l'invention peut se présenter sous différentes formes. La composition lubrifiante selon l'invention peut notamment être une composition anhydre.

De manière préférée, cette composition lubrifiante n'est pas une émulsion.

### Véhicule électrique :

Dans un mode de réalsiation, la composition lubrifiante selon l'invention est utilisée pour refroidir le moteur d'un véhicule électrique.

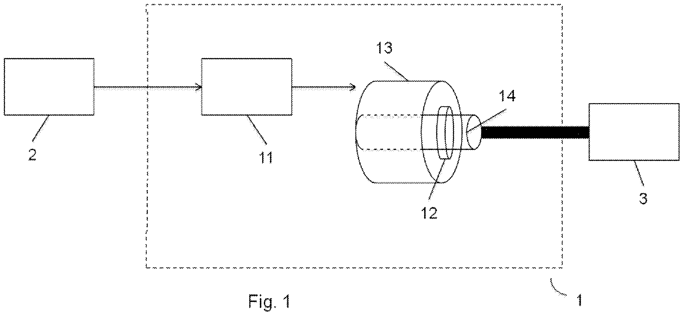

La figure 1 est une représentation schématique d'un système de motorisation électrique.

Le moteur d'un véhicule électrique (1) comprend une électronique de puissance (11) reliée à un stator (13) et un rotor (14). La vitesse de rotation du rotor est très importante, ce qui implique d'ajouter un réducteur de vitesse (3) entre le moteur électrique (1) et les roues du véhicule.

Le stator comprend des bobines, en particulier des bobines de cuivre qui sont alimentées alternativement par un courant électrique. Ceci permet de générer un champ magnétique tournant. Le rotor comprend lui-même des bobines ou des aimants permanents ou d'autres matériaux magnétiques et est mis en rotation par le champ magnétique tournant.

L'électronique de puissance, le stator et le rotor d'un moteur électrique sont des pièces dont la structure est complexe et générant une forte quantité de chaleur au cour du fonctionnement du moteur. C'est pourquoi la composition lubrifiante telle que définie ci-dessus est plus spécifiquement utilisée pour refroidir l'électronique de puissance et/ou le rotor et/ou le stator du moteur électrique.

Dans un mode de réalisation préféré, l'invention concerne l'utilisation d'une composition lubrifiante telle que définie ci-dessus pour refroidir l'électronique de puissance, le rotor et le stator du moteur électrique.

Un roulement (12) permettant de maintenir l'axe de rotation est également intégré entre le rotor et le stator. Ce roulement est soumis à de fortes contraintes mécaniques et pose des problèmes d'usure par fatigue. Il est donc nécessaire de lubrifier le roulement afin d'augmenter sa durée de vie. C'est pourquoi la composition lubrifiante telle que définie ci-dessus est également utilisée pour lubrifier un moteur de véhicule électrique.

Dans un mode de réalisation préféré, l'invention concerne l'utilisation d'une composition lubrifiante telle que définie ci-dessus pour lubrifier les roulements situés entre le rotor et le stator.

Le réducteur (3), qui fait partie de la transmission, a pour rôle de réduire la vitesse de rotation en sortie du moteur électrique et d'adapter la vitesse transmise aux roues, permettant dans le même temps de contrôler la vitesse du véhicule. Ce réducteur est soumis à de fortes contraintes en friction et nécessite donc d'être lubrifié de manière appropriée afin d'éviter qu'il soit endommagé trop rapidement. C'est pourquoi la composition lubrifiante telle que définie ci-dessus est également utilisée pour lubrifier le réducteur et la transmission d'un véhicule électrique.

Dans un mode de réalisation préféré, l'invention concerne l'utilisation d'une composition lubrifiante telle que définie ci-dessus pour lubrifier le réducteur d'un véhicule électrique.

L'invention concerne également l'utilisation d'une composition lubrifiante telle que définie ci-dessus pour refroidir l'électronique de puissance et/ou le couple rotor/stator et lubrifier le réducteur et/ou les roulements du couple rotor/stator d'un moteur d'un véhicule électrique.

L'invention concerne également l'utilisation d'une composition lubrifiante telle que définie ci-dessus pour refroidir la batterie d'un véhicule électrique.

En effet, le moteur électrique est alimenté par une batterie électrique (2). Les batteries lithium-ion sont les plus répandues dans le domaine des véhicules électriques. Le développement de batteries de plus en plus puissantes et dont la taille est de plus en plus réduite implique l'apparition du problème de refroidissement de cette batterie. En effet, dès lors que la batterie dépasse des températures de l'ordre de 50 à 60°C, il existe un fort risque pour que la batterie s'enflamme voire explose. Il existe également un besoin de maintenir la batterie à une température supérieure à environ 20 à 25°C afin d'éviter que la batterie ne se décharge trop rapidement et de prolonger sa durée de vie. Il existe donc un besoin de maintenir la batterie à une température acceptable.

L'invention concerne également l'utilisation d'une composition telle que définie ci-dessus pour refroidir la batterie et le moteur d'un véhicule électrique.

L'ensemble des caractéristiques et préférences décrites pour la composition lubrifiante et au PAG ci-dessus s'applique également à ces utilisations.

Il est également décrit un procédé de refroidissement d'un moteur de véhicule électrique comprenant au moins une étape de mise en contact d'une pièce mécanique du moteur avec une composition telle que définie si dessus.

Il est également décrit un procédé de refroidissement de l'électronique de puissance et/ou du rotor et/ou du stator d'un moteur de véhicule électrique comprenant au moins une étape de mise en contact de l'électronique de puissance et/ou du rotor et/ou du stator avec une composition telle que définie si dessus.

Il est également décrit un procédé de lubrification d'un moteur de véhicule électrique comprenant au moins une étape de mise en contact d'une pièce mécanique du moteur avec une composition telle que définie si dessus.

Il est également décrit un procédé de lubrification des roulements situés entre le rotor et le stator et/ou du réducteur d'un moteur de véhicule électrique comprenant au moins une étape de mise en contact desdits roulements avec une composition telle que définie si dessus.

Il est également décrit un procédé de refroidissement et de lubrification d'un moteur de véhicule électrique comprenant au moins une étape de mise en contact d'une pièce mécanique du moteur avec une composition telle que définie si dessus.

Il est également décrit un procédé de refroidissement d'un moteur de véhicule électrique et de lubrification de la transmission dudit véhicule électrique comprenant au moins une étape de mise en contact d'une pièce mécanique du moteur et de la transmission avec une composition telle que définie si dessus.

Il est également décrit un procédé de refroidissement de l'électronique de puissance et/ou du couple rotor/stator et de lubrification du réducteur et/ou des roulements du couple rotor/stator d'un moteur de véhicule électrique comprenant au moins une étape de mise en contact de l'électronique de puissance et/ou du rotor et/ou du stator et du réducteur et/ou des roulements du couple rotor/stator avec une composition telle que définie si dessus.

Il est également décrit un procédé de refroidissement de la batterie d'un véhicule électrique comprenant au moins une étape de mise en contact de la batterie avec une composition telle que définie si dessus.

Il est également décrit un procédé de refroidissement de la batterie et du moteur d'un véhicule électrique comprenant au moins une étape de mise en contact de la batterie et d'une pièce mécanique du moteur avec une composition telle que définie si dessus.

L'ensemble des caractéristiques et préférences décrites pour la composition lubrifiante et pour le PAG ci-dessus s'applique également à ces procédés.

Le refroidissement du moteur électrique par la composition lubrifiante selon l'invention peut être mise en oeuvre par toute méthode connue de l'homme du métier.

Comme exemples de mise en oeuvre, on peut citer le refroidissement par jet, par sprayage (pulvérisation) ou encore par formation d'un brouillard à partir de la composition lubrifiante selon l'invention sous pression et par gravité, en particulier sur le bobinage du rotor et/ou du stator.

### EXEMPLES

Deux compositions lubrifiantes, CI1 et CC1 ont été formulées tel que décrit dans le tableau 1. Les quantités des différents composés sont exprimées en pourcentage massique par rapport au poids total de la composition.

**Tableau 1**

| | CI1 (Selon l'invention) | CC1 (Comparatif) |
|---|---|---|
| PAG 1 obtenu par polymérisation d'oxydes de propylène (SYNALOX 100-20B^{®} de la société DOW) | 52,8 | - |
| PAG 2 obtenu par polymérisation d'oxydes de propylène (SYNALOX 100-50B^{®} de la société DOW) | 44 | - |
| PAO 1 (viscosité de 4 mm²/s mesurée à 100°C selon la norme ASTM D445) | - | 68,1 |
| PAO 2 (viscosité de 1000 mm²/s mesurée à 100°C selon la norme ASTM D445) | - | 19,6 |
| Ester (NB7400^{®} de la société NYCO) | - | 10 |
| Package d'additifs 1 | 3,2 | - |
| Package d'additifs 2 | - | 2,3 |

Un moyen de mesurer les propriétés thermiques d'un fluide consiste à mesurer le coefficient d'échange thermique du fluide (transfert thermique par unité de surface et de température). Un fluide présentant un coefficient d'échange thermique plus important possède de meilleures propriétés en refroidissement.

Un essai permettant de mesurer le coefficient d'échange thermique de chacune des compositions lubrifiantes décrites dans le tableau 1 a été effectué.

Le principe de l'essai consiste à projeter un jet d'huile à l'aide d'un gicleur perpendiculairement sur une plaque métallique chauffée par induction. Une caméra thermique, placée au dessus de la plaque, enregistre le profil de température lors de la projection de l'huile. A partir des valeurs de variation de la température sur la plaque, il est alors possible de calculer le coefficient d'échange thermique moyen de la composition lubrifiante.

Il est possible de faire varier différents paramètres, en particulier la température de la plaque, la taille du gicleur et la pression à laquelle l'huile est projetée. La mesure du coefficient thermique est effectuée à différentes distances du point d'impact du jet sur la plaque métallique, cette distance correspondant au rayon. Les conditions de l'essai sont décrites dans le tableau 2.

**Tableau 2 - Conditions de l'essai**

| Caractéristique | Unité | |
|---|---|---|
| Température | °C | 113 |
| Pression | bar | 20-40 |
| Diamètre du gicleur | mm | 0,5 |
| Rayon | mm | 0-15 |

Les valeurs des coefficients thermiques des compositions testées dans les conditions d'essai du tableau 2, selon le rayon, sont présentées dans les tableaux 3 à 6. Les valeurs de coefficients d'échange thermique sont exprimées en W/K.m².

**Tableau 3 - Coefficients d'échange thermique des compositions- Rayon 0 mm**

| Pression (bar) | CI1 | CC1 |
|---|---|---|
| 40 | 4015 | 2520 |
| 38 | 3954 | 2486 |
| 36 | 4109 | 2557 |
| 34 | 4200 | 2323 |
| 32 | 3881 | 2135 |
| 30 | 3550 | 2060 |
| 28 | 3240 | 1858 |
| 26 | 4674 | 1815 |

**Tableau 4 Coefficients d'échange thermique des compositions - Rayon 5 mm**

| Pression (bar) | CI1 | CC1 |
|---|---|---|
| 40 | 3404 | 2459 |
| 38 | 3296 | 2417 |
| 36 | 3359 | 2389 |
| 34 | 3458 | 2216 |
| 32 | 3236 | 2019 |
| 30 | 3048 | 1966 |
| 28 | 2811 | 1819 |
| 26 | 3837 | 1780 |

**Tableau 5 Coefficients d'échange thermique des compositions - Rayon 10 mm**

| Pression (bar) | CI1 | CC1 |
|---|---|---|
| 40 | 2993 | 2031 |
| 38 | 2831 | 1962 |
| 36 | 2808 | 1919 |
| 34 | 2822 | 1765 |
| 32 | 2655 | 1583 |
| 30 | 2489 | 1523 |
| 28 | 2329 | 1375 |
| 26 | 3275 | 1318 |

**Tableau 6 Coefficients d'échange thermique des compositions - Rayon 15 mm**

| Pression (bar) | CI1 | CC1 |
|---|---|---|
| 40 | 2398 | 1323 |
| 38 | 2211 | 1269 |
| 36 | 2141 | 1239 |
| 34 | 2021 | 1147 |
| 32 | 1880 | 1052 |
| 30 | 1734 | 1012 |
| 28 | 1630 | 928 |
| 26 | 2402 | 908 |

Le coefficient d'échange thermique est toujours plus élevé pour la composition CI selon l'invention que pour la composition comparative CC correspondant à une composition de l'art antérieur. Ceci démontre qu'une composition selon l'invention possède de meilleures propriétés thermiques comparativement à une composition de l'art antérieur, impliquant ainsi de meilleures propriétés de refroidissement d'un moteur de véhicule électrique.

Par ailleurs, une mesure de désaération selon la méthode ASTM D3427 a été effectuée sur la composition CI selon l'invention. Cette mesure a permis de mettre en évidence qu'aucun volume d'air n'est absorbé par la composition au cours de l'essai.

Ceci permet de démontrer qu'une composition selon l'invention présente de bonnes propriétés de désaération, et donc conserve de bonnes propriétés de refroidissement au cours du temps.

## Revendications

1. Utilisation d'une composition lubrifiante comprenant au moins un polyalkylène glycol (PAG) obtenu par polymérisation ou copolymérisation d'oxydes d'alkylène comprenant de 2 à 8 atomes de carbone, de préférence de 2 à 4 atomes de carbone dans un véhicule électrique, ledit véhicule électrique comprenant un moteur électrique comme unique moyen de propulsion, dans laquelle la composition comprend de 70 à 99% en poids de PAG par rapport au poids total de la composition.

2. Utilisation d'au moins un polyalkylène glycol (PAG) obtenu par polymérisation ou copolymérisation d'oxydes d'alkylène comprenant de 2 à 8 atomes de carbone, de préférence de 2 à 4 atomes de carbone, dans une composition lubrifiante mise en oeuvre dans un véhicule électrique, ledit véhicule électrique comprenant un moteur électrique comme unique moyen de propulsion, dans laquelle la composition comprend de 70 à 99% en poids de PAG par rapport au poids total de la composition.

3. Utilisation selon la revendication 1 ou 2 pour refroidir le moteur.

4. Utilisation selon la revendication 1 ou 2 pour refroidir l'électronique de puissance et/ou le rotor et/ou le stator du moteur.

5. Utilisation selon la revendication 1 ou 2 pour refroidir la batterie.

6. Utilisation selon la revendication 1 ou 2 pour lubrifier le moteur.

7. Utilisation selon la revendication 1 ou 2 pour lubrifier les roulements situés entre le rotor et le stator et/ou le réducteur du moteur.

8. Utilisation selon la revendication 1 ou 2 pour lubrifier la transmission.

9. Utilisation selon la revendication 1 ou 2 pour refroidir et lubrifier le moteur.

10. Utilisation selon la revendication 1 ou 2 pour refroidir le moteur et pour lubrifier la transmission.

11. Utilisation selon l'une quelconque des revendications 1 à 10 dans laquelle le PAG est obtenu par copolymérisation d'oxyde d'éthylène et d'oxyde de propylène.

12. Utilisation selon l'une quelconque des revendications 1 à 10 dans laquelle le PAG est obtenu par polymérisation d'oxyde d'éthylène.

13. Utilisation selon l'une quelconque des revendications 1 à 10 dans laquelle le PAG est obtenu par polymérisation d'oxyde de propylène.

14. Utilisation selon l'une quelconque des revendications 1 à 10 dans laquelle le PAG est obtenu par polymérisation d'oxyde de butylène.

15. Utilisation selon l'une quelconque des revendications précédentes dans laquelle la composition lubrifiante comprend de 80 à 99% en poids de PAG par rapport au poids total de la composition.

## Patentansprüche

1. Verwendung einer Schmiermittelzusammensetzung, umfassend mindestens ein Polyalkylenglycol (PAG), das durch Polymerisation oder Copolymerisation von Alkylenoxiden, umfassend 2 bis 8 Kohlenstoffatome, vorzugsweise 2 bis 4 Kohlenstoffatome, erlangt wird, in einem Elektrofahrzeug, das Elektrofahrzeug umfassend einen Elektromotor als einzige Antriebseinrichtung, wobei die Zusammensetzung 70 bis 99 Gewichts-% PAG, bezogen auf das Gesamtgewicht der Zusammensetzung, umfasst.

2. Verwendung von mindestens einem Polyalkylenglykol (PAG), das durch Polymerisation oder Copolymerisation von Alkylenoxiden, umfassend 2 bis 8 Kohlenstoffatome, vorzugsweise 2 bis 4 Kohlenstoffatome, erlangt wird, in einer Schmiermittelzusammensetzung, die in einem Elektrofahrzeug eingesetzt wird, das Elektrofahrzeug umfassend einen Elektromotor als einzige Antriebseinrichtung, wobei die Zusammensetzung 70 bis 99 Gewichts-% PAG, bezogen auf das Gesamtgewicht der Zusammensetzung, umfasst.

3. Verwendung nach Anspruch 1 oder 2 zum Kühlen des Motors.

4. Verwendung nach Anspruch 1 oder 2 zum Kühlen der Leistungselektronik und/oder des Rotors und/oder des Stators des Motors.

5. Verwendung nach Anspruch 1 oder 2 zum Kühlen der Batterie.

6. Verwendung nach Anspruch 1 oder 2 zum Schmieren des Motors.

7. Verwendung nach Anspruch 1 oder 2 zum Schmieren der Lager, die sich zwischen dem Rotor und dem Stator befinden, und/oder des Getriebes des Motors.

8. Verwendung nach Anspruch 1 oder 2 zum Schmieren der Kraftübertragung.

9. Verwendung nach Anspruch 1 oder 2 zum Kühlen und Schmieren des Motors.

10. Verwendung nach Anspruch 1 oder 2 zum Kühlen des Motors und zum Schmieren der Kraftübertragung.

11. Verwendung nach einem der Ansprüche 1 bis 10, wobei das PAG durch Copolymerisation von Ethylenoxid und Propylenoxid erlangt wird.

12. Verwendung nach einem der Ansprüche 1 bis 10, wobei das PAG durch Polymerisation von Ethylenoxid erlangt wird.

13. Verwendung nach einem der Ansprüche 1 bis 10, wobei das PAG durch Polymerisation von Propylenoxid erlangt wird.

14. Verwendung nach einem der Ansprüche 1 bis 10, wobei das PAG durch Polymerisation von Butylenoxid erlangt wird.

15. Verwendung nach einem der vorherigen Ansprüche, wobei die Schmiermittelzusammensetzung 80 bis 99 Gewichts-% PAG, bezogen auf das Gesamtgewicht der Zusammensetzung, umfasst.

## Claims

1. Use of a lubricant composition comprising at least one polyalkylene glycol (PAG) obtained by polymerisation or copolymerisation of alkylene oxides comprising 2 to 8 carbon atoms, preferably 2 to 4 carbon atoms in an electric vehicle, the electric vehicle comprising an electric engine as a single drive means, wherein the composition comprises 70 to 99% by weight of PAG with respect to the total weight of the composition.

2. Use of at least one polyalkylene glycol (PAG) obtained by polymerisation or copolymerisation of alkylene oxides comprising 2 to 8 carbon atoms, preferably 2 to 4 carbon atoms, in a lubricant composition implemented in an electric vehicle, the electric vehicle comprising an electric engine as a single drive means, wherein the composition comprises 70 to 99% by weight of PAG with respect to the total weight of the composition.

3. Use according to claim 1 or 2 to cool the engine.

4. Use according to claim 1 or 2, to cool the power electronics and/or the rotor and/or the stator of the engine.

5. Use according to claim 1 or 2, to cool the battery.

6. Use according to claim 1 or 2, to lubricate the engine.

7. Use according to claim 1 or 2, to lubricate the bearings located between the rotor and the stator and/or the reduction gear of the engine.

8. Use according to claim 1 or 2, to lubricate the transmission.

9. Use according to claim 1 or 2, to cool and lubricate the engine.

10. Use according to claim 1 or 2, to cool the engine and to lubricate the transmission.

11. Use according to any one of claims 1 to 10, wherein the PAG is obtained by copolymerisation of ethylene oxide and propylene oxide.

12. Use according to any one of claims 1 to 10, wherein the PAG is obtained by polymerisation of ethylene oxide.

13. Use according to any one of claims 1 to 10, wherein the PAG is obtained by polymerisation of propylene oxide.

14. Use according to any one of claims 1 to 10, wherein the PAG is obtained by polymerisation of butylene oxide.

15. Use according to any one of the preceding claims, wherein the lubricant composition comprises 80 to 99% by weight of PAG with respect to the total weight of the composition.
